# EUROPEAN PATENT SPECIFICATION

(11) **EP 0 435 217 B1**
(45) Date of publication and mention of the grant of the patent: **27.03.1996**
(21) Application number: 90125232.0
(22) Date of filing: 21.12.1990
(51) Int. Cl.: H01S 3/06, H01S 3/094

(54) **Embedded Bragg grating pumped lasers**
Gepumpte Laser mit eingebetteter Bragg-Gitterstruktur
Lasers à pompage à réseau de Bragg enterré

(30) Priority: 26.12.1989 US 457118
(43) Date of publication of application: 03.07.1991
(73) Proprietor: UNITED TECHNOLOGIES CORPORATION, Hartford, CT 06101 (US)
(72) Inventor: Leonberger, Frederick John, Glastonbury, CT 06033 (US); Glenn, William Henry, Vernon, CT 06066 (US)
(74) Representative: Klunker . Schmitt-Nilson . Hirsch

(56) References cited:
- WO-A-86/01303
- IEEE JOURNAL OF QUANTUM ELECTRONICS, vol. QE-13, no. 4, April 1977, pages 145- 152, New York, US; G. EVANS et al.: "Mode coupling and distributed feedback lasers in periodic fiber waveguides"
- TECHNICAL DIGEST OF THE EUROPEAN CONFERENCE ON OPTICAL COMMUNICATION 1987 (ECOC '87), vol. III: Post Deadline Papers, pages 89-94; D.N. PAYNE et al.: "Rare- earth doped fibre lasers and amplifiers"
- PATENT ABSTRACTS OF JAPAN, vol. 13, no. 401 (E-816), 6th September 1989 & JP-A- 01 143 380 (FUJIKURA LDT ) 05-06 1989
- N.T.I.S. TECHNICAL NOTES, April 1984, page 286, A-K, Springfield, Virginia, US; C.R. CHUBB et al.: "Fabricating grating couplers on optical fibers"
- ELECTRONICS LETTERS, vol. 26, no. 21, October 1990, pages 1829-1830, Stevenage, Herts, GB; G.A. BALL et al.: "Nd3+ fibre laser utilising intra-core bragg reflectors"

## Description

### Technical Field

The present invention relates to an optical fiber laser according to the preamble of claim 1.

### Background Art

There are already known various constructions of pumped optical fiber lasers, among them such utilizing fully or partially reflective coatings on the respective end faces of the optical fiber sections constituting the laser resonance cavities, and such using external mirrors to delimit the laser cavities. Optical fiber lasers using mirrors are disclosed in TECHNICAL DIGEST OF THE EUROPEAN CONFERENCE ON OPTICAL COMMUNICATION 1987 (ECOC '87), Vol. III: Post Deadline Papers, pages 89-94; D.N. PAYNE et al.: "Rare-earth doped fiber lasers and amplifiers" and in PATENT ABSTRACTS OF JAPAN, Vol. 13, no. 401 (E-816), JP-A-01 143 380. Even though these solutions have achieved some degree of success and/or acceptance in the laser manufacturing and utilization fields, they still suffer of certain drawbacks. So, for instance, because of the physical properties of the heretofore used reflecting elements, and the temperature related changes in their configurations, it is very difficult if not impossible to assure under all operating conditions that the light emitted by such known lasers will have the desired wavelength and that the wavelength band at which the lasers of this type issue light will be in the desired narrow range around a central wavelength.

It is further known from the above-mentioned publication TECHNICAL DIGEST OF THE EUROPEAN CONFERENCE ON OPTICAL COMMUNICATION, to combine optical fiber lasers with fiber gratings as a wavelength selective means which may be etched into a short length of the highly doped fiber being located between the ends of the fiber laser cavity or which may be positioned to control the spectral output of the fiber laser. The resonance cavities are delimited by mirrors.

It is proposed in IEEE JOURNAL OF QUANTUM ELECTRONICS, Vol. QE-13, no. 4, April 1977, pages 145-152, New York; G. EVANS et al.: "Mode Coupling and distributed feedback lasers in periodic fiber waveguides", to overcome the problem of obtaining a high-efficiency coupling between an optical fiber and an optical source by incorporating a laser as an integral part of the fiber using distributed feedback from a perturbation of the index of refraction or the fiber boundary. There is no disclosure as to the means for delimiting the resonance cavity.

Refractive index perturbations can be provided by Bragg reflection gratings which can be impressed within fibers by means of a method as it is known from WO-A-8 601 303.

Grating couplers on optical fibers can be used for coupling signals into and out of single mode optical waveguides as it is disclosed in N.T.I.S. TECHNICAL NOTES, April 1984, page 286, A-K, Springfild, Virginia; C.R. CHOBB et al.: "Fabricating Grating Couplers on Optical Fibers".

Grating Couplers for thin film waveguide elements are disclosed in EP-A-0 267 036.

Accordingly, it is a general object of the present invention to avoid the disadvantages of the prior art.

More particularly, it is an object of the present invention to provide pumped optical fiber laser arrangements which do not possess the disadvantages of the known arrangements of this kind.

Still another object of the present invention is so to develop the arrangements of the type here under consideration as to improve their performance in terms of wavelength stability and emission range narrowness.

It is yet another object of the present invention to devise arrangements of the above type which are able to achieve high conversion efficiencies.

A concomitant object of the present invention is to design the optical fiber lasers of the above type in such a manner as to be relatively simple in construction, inexpensive to manufacture, easy to use, and yet reliable in operation.

### Disclosure of the Invention

The present invention provides an all-fiber laser as defined in claim 1. Preferred embodiments of the invention are defined in the dependent claims.

### Brief Description of the Drawing

The present invention will be described in more detail below with reference to the accompanying drawing in which:
Figure 1 is a somewhat simplified side elevational view of an optically pumped optical fiber laser arrangement of the present invention;
Figure 2 is a view similar to that of Figure 1 but showing a modification of the arrangement thereof not in accordance with the invention;
Figure 3 is a simplified perspective view of an arrangement for applying longitudinal stresses to an optical fiber, which is suited for use in the laser arrangement of the type revealed in Figure 2;
Figure 4 is another view similar to that of Figure 1 but showing a further modification of the arrangement thereof;
Figure 5 is a further view similar to that of Figure 1 but showing an additional modification of the arrangement thereof;
Figure 6 is a somewhat simplified perspective view of a multicavity optically pumped optical fiber laser arrangement utilizing the concepts depicted in Figure 1;
Figure 7 is also a view similar to that of Figure 1 but showing the utilization of the concepts of Figure 4 in conjunction with two optical fibers; and
Figure 8 is a view similar to that of Figure 3 but showing a multiple Bragg grating optically pumped optical fiber laser arrangement.

### Best Mode for Carrying Out the Invention

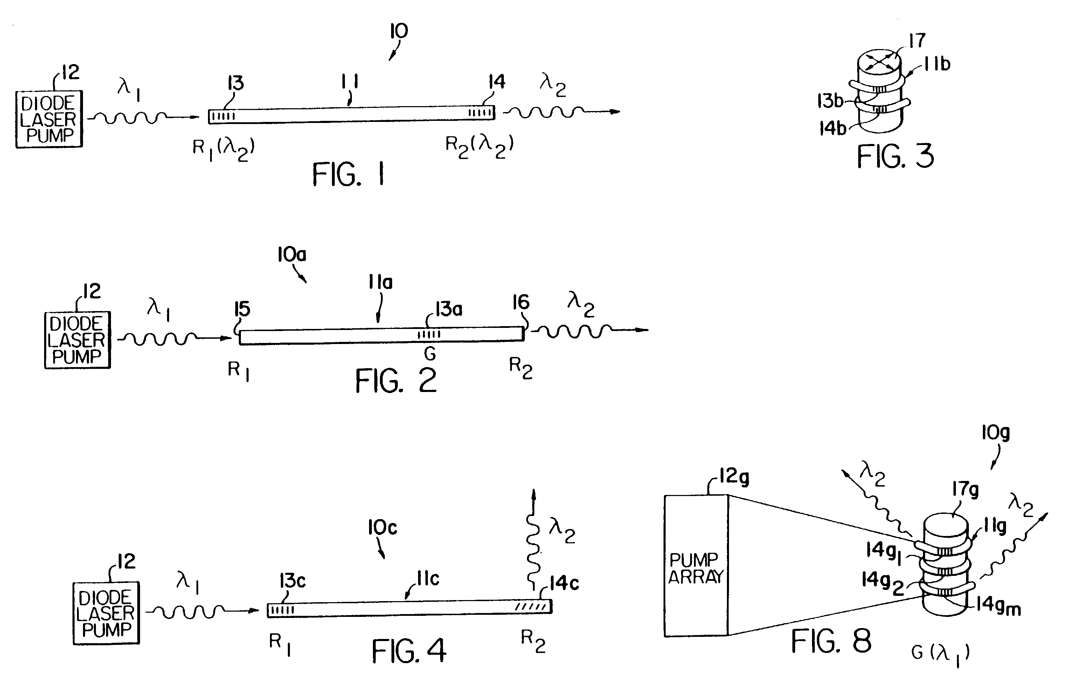

Referring now to the drawing in detail, it is to be mentioned first that the same reference numerals, possibly supplemented with reference characters and/or numerals where appropriate, have been used throughout to identify corresponding parts. It may be seen in Figure 1 that that the reference numeral 10 identifies a pumped optical fiber laser arrangement 10 in its entirety. The arrangement 10 includes, as its main components, an optical fiber section 11 and a laser pump 12 which is of any known construction and advantageously is constituted by or includes a diode laser. The laser pump 12 issues light of a wavelength λ ₁, and this light is launched, in any well known manner, into the optical fiber section 11 for propagation longitudinally thereof. As is well known to those practicing in this field, the optical fiber section 11 may include a fiber core and a cladding surrounding the core, in which case the light from the laser pump 12 is launched into the core and is guided therein.

The optical fiber section 11 (preferably the core thereof) is shown to be provided with two gratings 13 and 14 which are spaced from one another in the longitudinal direction of the section 11 and are shown to be situated at the respective ends of the section 11. The gratings 13 and 14 are reflective, to a greater or lesser degree, but only to light at a wavelength λ₂ (actually, in a very narrow band around this central wavelength), being substantially transparent to light at all other wavelengths, including, at least as far as the grating 13 is concerned, the pumping wavelength λ₁. Thus, the gratings 13 and 14 act as reflectors and thus axially delimit the laser cavity in which the lasing at the wavelength λ₂ takes place.

An embedded grating of specified periodicity will partially or wholly reflect a specific wavelength of an optical signal carried by the fiber section 11. This type of grating, which has been developed for sensing stress and/or temperature changes in structures, is incorporated or embedded in the core of an optical fiber by a method disclosed in the above patent. As discussed there, permanent periodic gratings of this kind can be provided or impressed in the core of an optical fiber by exposing the core through the cladding to the interference pattern of two compatible ultraviolet light beams that are directed against the optical fiber at two angles relative to the fiber axis that complement each other to 180°. This results in a situation where the material of the fiber core has permanent periodic variations in its refractive index impressed therein by the action of the interfering ultraviolet light beams thereon, with the individual grating elements (i.e. the periodically repetitive regions of the core exhibiting the same refractive index behavior) being oriented normal to the fiber axis so as to constitute a Bragg grating. The embedded Bragg grating of this kind reflects, of the light launched into or otherwise guidedly propagating in the fiber core in a propagation direction that brings it to the respective grating 13 or 14, only that having a wavelength within a very narrow range around a central wavelength λ₂ that is dependent on the grating element periodicity, back along the fiber axis opposite to the original propagation direction while being substantially transparent to light at wavelengths outside the aforementioned narrow band so that it does not adversely affect the passage of such other light therethrough. In effect, this type of grating creates a narrow notch in the transmission spectrum and, by the same token, a similarly narrow peak in the reflection spectrum. This reflection spectrum peak is being utilized in accordance with the present invention to determine the lasing wavelength λ₂, and the axial length of each of the gratings 13 and 14 is selected in such a manner as to obtain the desired reflectivities R₁(λ₂) and R₂(λ₂) at the gratings 13 and 14, respectively.

For the optical fiber section 11 to operate as an optically pumped laser, the material of at least the core thereof is rare-earth doped. In the present device, it is contemplated either to impress the gratings 13 and 14 directly into the (rare-earth doped) active material of the optical fiber section (or its care), or to form such gratings 13 and 14 in optical fiber pieces (or cores thereof) of passive materials, and to splice the same with an optical fiber piece made of, or having a core of, the active material, to thus obtain the optical fiber section 11. In either event, the optical fiber section 11 is unitary or integral, so that no problems arising from the presence of interfaces or gaps are encountered. This comment is equally applicable to the optical fiber embedded grating pumped laser arrangement constructions that will be described below.

Turning now to Figure 2 of the drawing, it may be seen therein that in this instance the optical fiber laser arrangement 10a includes a grating 13a which is tunable as far as its central wavelength λ₂ is concerned. The laser cavity is shown to be delimited by conventional reflectors 15 and 16 (such as reflective coatings on the respective fiber end faces) of respective reflectivities R₁ and R₂ in the wavelength range over which the central wavelength λ₂ is tunable, while at least the reflector or mirror 15 is highly transparent to light at the wavelength λ₁. The tuning of the variable grating 13a can be accomplished, for instance, by winding the portion of the section 11 that includes the variable grating 13a around a mandrel, and by changing the diameter or circumferential dimension of such mandrel, for instance by the application of an electrical potential difference to the mandrel when the latter is made of a piezoelectric material. It will be appreciated that, by thus introducing longitudinal strains and stresses into the grating region 13a, the periodicity of the grating 13a, that is the distance between longitudinally adjacent grating elements that exhibit the same refractive index variation behavior (and possibly also the overall or average index of refraction of the grating material) changes, with attendant change in the central wavelength λ₂.

In the alternative, the gratings 13 and 14 of Figure 1, or the reflectors 15 and 16 of Figure 2, can be of the variable variety as well. In this case, as illustrated in Figure 3 of the drawing, the portion of the optical fiber section 11b that includes the variable gratings 13b and 14b (or the variable grating 13a and the variable grating reflectors 15 and 16) may be wrapped around a mandrel 17 that again may be of piezoelectric material and is then radially expanded, as indicated by arrows, by applying electrical potential differences thereto, so as to change the circumference thereof and thus ultimately the spacings between the respective grating elements with attendant shifts in the central wavelength λ₂.

The arrangement 10c depicted in Figure 4 of the drawing is similar to that shown in Figure 1 except that the grating 14c redirects the light of the wavelength λ₂ out of the fiber section 11c at an angle (as shown, a substantially a right angle) to the longitudinal axis of the section 11c.

In any event, the grating 14c constitutes not only a reflector that delimits, at its end, the laser cavity, but also a tap for light of the wavelength λ₂.

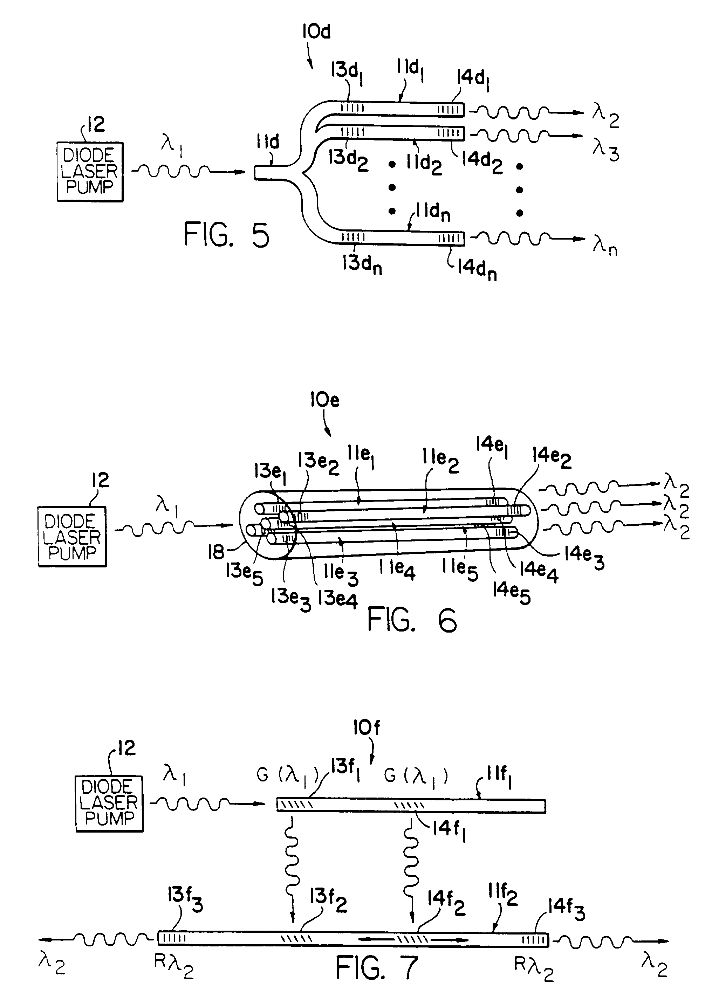

Figure 5 shows the application of the principles involved in the arrangement 10 of Figure 1 to a multiple wavelength embedded grating laser arrangement 10d. In this case, the laser source 14 launches light into a shared input optical fiber portion lla which is then coupled to a plurality of individual laser optical fiber sections 11d₁ to 11dₙ (wherein n is any selected integral number), which are shown to be but need not be spatially parallel and each of which contains a laser cavity delimited by respective gratings 13d₁ to 13dₙ, on the one hand, and 14d₁ to 14dₙ, on the other hand. Herein, the associated ones of the gratings 13d₁ to 13dₙ and 14d₁ to 14dₙ (i.e. those located in the respective ones of the sections 11d₁ to 11dₙ) are both reflective to light having the same central wavelength λ₁ to λₙ, but the wavelengths λ₁ to λₙ are all different.

Figure 6 of the drawing is an illustration of a multicavity embedded grating optical fiber laser arrangement 10e containing, in this example, five optical fiber sections 11e₁ to 11e₅ (e.g. clad optical fibers or unclad optical fiber cores) that are contained in a common envelope 18 (such as in a common outer cladding). The laser cavities of the optical fiber sections 11e₁ to 11e₅ are delimited by respective gratings 13e₁ to 13e₅ and 14e₁ to 14e₅, and the pumping laser source 14 launches light, in any known manner, into all of the optical fiber sections 11e₁ to 11e₅. As shown, all of the gratings 13e₁ to 13e₅ and 14e₁ to 14e₅ are reflective to light at the same wavelength λ₂, so that the light issued from such parallel laser cavities constructively combines, giving the arrangement 10e an optical output power that is a multiple of that of the arrangement 10 of Figure 1.

As shown in Figure 7, the arrangement 10f depicted therein includes two parallel fiber sections 11f₁ and 11f₂. The fiber section 11f₁ includes gratings 13f₁ and 14f₁ which are akin to and operate in a manner similar to that of the grating 14c of Figure 4 and which are reflective to light at the wavelength λ₁ issued by the pumping laser source 14. On the other hand, the fiber section 11f₂ includes, in addition to gratings 13f₂ and 14f₂ that also are akin to and operate in a manner similar to that of the grating 14c and reflect light at the wavelength λ₁, additional gratings 13f₃ and 14f₃ which are reflective to light at a wavelength λ₂. Thus, optical power is transmitted between the sections 11f₁ and 11f₂ at the central wavelength λ₁ due to the cooperation of the gratings 13f₁ and 14f₁ with the gratings 13f₂ and 14f₂, whereas the fiber section 11f₂ issues laser light at the central wavelength λ₂.

Last but not least, Figure 8 of the drawing is an illustration of an arrangement 10g of the type described above in which, however, the optical power is increased by launching light into the optical fiber section llg at a plurality of locations. In the illustrated example of construction of the arrangement 10g, the pumping light source is constituted by a pumping laser array 14g, and the optical fiber section is wound around a cylindrical support 17g in such a manner that a plurality of embedded gratings 14g₁ to 14gₘ (m being an arbitrarily chosen integral number) of the type described above in conjunction with the grating 14c of Figure 4 is exposed to laser light issued by the pumping laser array 14g.

## Claims

1. An optical fiber laser (10), comprising:
an optical fiber section (11) including an elongated solid waveguiding portion capable of guiding light along a longitudinal axis between longitudinally spaced ends thereof;
at least one longitudinal active region of said waveguiding portion being of a rare-earth-doped material capable of emitting stimulated light at a lasing frequency (λ2) in response to stimulation by stimulating light at a pumping frequency (λ1);
two axially spaced reflectors (13, 14) delimiting said active region making up a resonator cavity having an optical resonant frequency corresponding to said lasing frequency (λ2);
**characterized in that**:
each of said reflectors (13, 14) is constituted by an embedded Bragg grating constituting a multitude of axially consecutive periodic pertubations in the refractive index of said waveguiding portion;
said grating (13, 14) having a reflectivity profile that is a maximum at a central reflection wavelength corresponding to said lasing frequency (λ2) and said grating (13, 14) reflecting a predetermined amount of said lasing frequency (λ2) and;
the axial length of said resonator cavity, the reflectivity of said grating (13, 14) and the activity of said active region being such that lasing occurs at said lasing frequency (λ2);
thereby creating an all-fiber laser.

2. The fiber laser of claim 1 further comprising tuning means (17) for changing the length of said cavity so as to change said lasing wavelength (λ2) of the fiber laser.

3. The fiber laser of claim 1 further comprising tuning means for changing the length of said cavity and at least one of said gratings (13, 14) so as to change said lasing wavelength (λ2) of the fiber laser.

4. The fibre laser of any of claims 1 to 3, wherein at least one of said gratings (13, 14) is oriented at an angle such that output light from said laser is not directed along the longitudinal axis of said cavity.

5. The fiber laser of any of claims 1 to 4 wherein said gratings (13, 14) are spliced onto the ends of said waveguiding portion so as to create said resonant cavity.

6. The fiber laser of any of claims 1 to 5 wherein said stimulating light is incident not along the longitudinal axis of said waveguiding portion.

7. The fiber laser of any of claims 1 to 6 further comprising a plurality of said lasers (11 d1 ... 11dn; 11e1 ....11e5) each being pumped simultaneously by said stimulating light (λ1).

8. The fiber laser of claim 7 further comprising a common waveguiding portion (11 d) which is optically connected to one end of each of said plurality of lasers (11 d1 .... 11 dn) along which said stimulating light (λ1) propagates.

9. The fiber laser of any of claims 1 to 8 further comprising pump means (12) for providing said stimulating light (λ1) to said laser.

10. The fiber laser of claim 10 wherein said pump means (12) comprises a laser diode.

## Patentansprüche

1. Lichtleitfaser-Laser (10) umfassend:
- einen Lichtleitfaserabschnitt (11), der einen langgestreckten massiven Wellenleiterabschnitt aufweist, der in der Lage ist, Licht entlang einer Längsachse zwischen dessen in Längsrichtung beabstandeten Enden zu leiten;
- mindestens eine aktive Längszone des Wellenleiterabschnitts, die aus mit Seltenerd-Material dotiertem Material besteht, welches ansprechend auf eine Simulierung mit Anregungslicht einer Pumpfrequenz (λ1) stimuliertes Licht bei einer Laserfrequenz (λ2) zu emittieren vennag;
- zwei axial beabstandete Reflektoren (13, 14), die die aktive Zone begrenzen und einen Resonatorhohlraum mit einer optischen Resonanzfrequenz entsprechend der Laserfrequenz (λ2) bilden;
**dadurch gekennzeichnet**, daß:
- jeder der Reflektoren (13, 14) gebildet wird durch ein eingebettetes Bragg-Gitter, welches eine Mehrzahl von axial aufeinanderfolgenden, periodischen Störungen im Brechnungsindex des Wellenleiterabschnitts bildet;
- wobei das Gitter (13, 14) ein Reflexionsvermögen-Profil besitzt, welches bei einer Mitten-Reflexionswellenlänge entsprechend der Laserfrequenz (λ2) ein Maximum hat, und das Gitter (13, 14) einen vorbestimmten Betrag der Laserfrequenz (λ2) reflektiert, und
- wobei die axiale Länge des Resonatorhohlraums, das Reflexionsvennögen des Gitters (13, 14) und die Aktivität der aktiven Zone derart beschaffen sind, daß Laserbetrieb bei der Laserfrequenz (λ2) stattfindet;
um dadurch einen Vollfaserlaser zu bilden.

2. Faserlaser nach Anspruch 1, weiterhin umfassend eine Abstimmeinrichtung (17) zum Ändern der Länge des Hohlraums, damit dadurch die Laserwellenlänge (λ2) des Faserlasers geändert wird.

3. Faserlaser nach Anspruch 1, weiterhin umfassend eine Abstimmeinrichtung zum Ändern der Länge des Hohlraums und mindestens eines der Gitter (13, 14), um dadurch die Laserwellenlänge (λ2) des Faserlasers zu ändern.

4. Faserlaser nach einem der Ansprüche 1 bis 3, bei dem mindestens eines der Gitter (13, 14) in einem derartigen Winkel orientiert ist, daß das Ausgangslicht des Lasers nicht entlang der Längsachse des Hohlraums gelenkt wird.

5. Faserlaser nach einem der Ansprüche 1 bis 3, bei dem die Gitter (13, 14) an den Enden des Wellenleiterabschnitts gespleißt sind, um den Resonatorhohlraum zu bilden.

6. Faserlaser nach einem der Ansprüche 1 bis 5, bei dem das Anregungslicht nicht entlang der Längsachse des Wellenleiterabschnitts auftrifft.

7. Faserlaser nach einem der Ansprüche 1 bis 6, weiterhin umfassend eine Mehrzahl von Lasern (11 d1 ... 11dn ; 11e1 ... 11e5), die jeweils gleichzeitig von dem Anregungslicht (λ1) gepumpt werden.

8. Faserlaser nach Anspruch 7, weiterhin umfassend einen gemeinsamen Wellenleiterabschnitt (11d), der optisch mit einem Ende von jedem aus der Mehrzahl von Lasern (11 d1 ... 11 dn) verbunden ist, entlang welchem sich das Anregungslicht (λ1) ausbreitet.

9. Faserlaser nach einem der Ansprüche 1 bis 8, weiterhin umfassend eine Pumpeinrichtung (12), um das Anregungslicht (λ1) für den Laser bereitzustellen.

10. Faserlaser nach Anspruch 10, bei dem die Pumpeinrichtung (12) eine Laserdiode aufweist.

## Revendications

1. Un laser à fibre optique (10), comprenant :
une section à fibre optique (11) , comprenant une partie guide d'ondes massive allongée, susceptible de guider la lumière sur son axe longitudinal, entre ses extrémités espacées longitudinalement;
au moins une zone active longitudinale de ladite partie guide d'ondes étant réalisée en un matériau dopée par une terre rare, susceptible d'émettre une lumière stimulée à une fréquence laser (λ2), en réponse à la stimulation faite en stimulant la lumière à une fréquence de pompage (λ1);
deux réflecteurs (13, 14) espacés axialement, délimitant ladite zone active en constituant une cavité de résonateur ayant une fréquence de résonance optique correspondant à ladite fréquence laser (λ2);
caractérisé en ce que :
chacun desdits réflecteurs (13, 14) est constitué d'un réseau de Bragg noyé, constituant une pluralité de perturbations périodiques axiales consécutives dans l'indice de réfraction de ladite partie guide-d'ondes;
ledit réseau (13, 14) ayant un profile de réflexivité ayant son maximum pour une longueur d'onde de réflexion centrale correspondant à ladite fréquence laser (λ2) et ledit réseau (13, 14) réfléchissant une quantité prédéterminé de ladite fréquence laser (λ2), et;
la longueur axiale de ladite cavité de résonateur, la réflexivité dudit réseau (13, 14) et l'activité de ladite zone active étant telles qu'un effet laser se produit à ladite fréquence laser (λ2);
de manière à créer un laser intégralement en fibre.

2. Le laser à fibre selon la revendication 1, comprenant un moyen d'accord (17) pour modifier la longueur de ladite cavité de façon à modifier ladite longueur d'onde d'émission laser (λ2) du laser à fibre.

3. Le laser à fibre selon la revendication 1, comprenant un moyen d'accord pour modifier la longueur de ladite cavité et d'au moins l'un desdits réseaux (13, 14), de façon à modifier ladite longueur d'onde d'émission laser (λ2) du laser à fibre.

4. Le laser à fibre selon l'une quelconques des revendications 1 à 3, dans lequel au moins l'un desdits réseaux (13, 14) est orienté sous un angle tel que la lumière sortant dudit laser ne soit pas dirigée dans l'axe longitudinal de ladite cavité.

5. Le laser à fibre selon l'une quelconques des revendications 1 à 4, dans lequel lesdits réseaux (13, 14) sont épissés aux extrémités de ladite partie guide d'ondes de manière à créer ladite cavité de résonance.

6. Le laser à fibre selon l'une quelconques des revendications 1 à 5, dans lequel ladite lumière de stimulation est incidente dans une direction différente de l'axe longitudinal de celle de ladite partie guide d'ondes.

7. Le laser à fibre selon l'une quelconques des revendications 1 à 6, comprenant en outre une pluralité desdits lasers (11d1 ... 11dn; 11e1 ...11e5) pompés chacun simultanément par ladite lumière de stimulation (λ1).

8. Le laser à fibre selon la revendication 7, comprenant en outre une partie guide d'ondes (11d) commune, reliée optiquement à une extrémité de chacun parmi ladite pluralité de lasers (11dl ... 11dn) le long desquels ladite lumière de stimulation (λ1) se propage.

9. Le laser à fibre selon l'une quelconques des revendications 1 à 8, comprenant en outre un moyen de pompage (12) pour fournir ladite lumière de stimulation (λ1) audit laser.

10. Le laser à fibre selon la revendication 9, dans lequel ledit moyen de pompage (12) comprend une diode laser.
